(19) **Europäisches Patentamt**
**European Patent Office**
**Office européen des brevets**

(11) **EP 4 517 748 A1**

(12) **EUROPEAN PATENT APPLICATION**

(43) Date of publication:
05.03.2025 Bulletin 2025/10

(21) Application number: 24193105.4

(22) Date of filing: 06.08.2024

(51) International Patent Classification (IPC):
**G10L 19/008** (2013.01)   **G06F 3/16** (2006.01)
**G10L 19/16** (2013.01)

(52) Cooperative Patent Classification (CPC):
**G10L 19/008; G06F 3/165; H04R 3/005; H04S 3/008; H04S 7/304;** G10L 19/167; H04S 2400/11; H04S 2400/15; H04S 2420/03; H04S 2420/11

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: 01.09.2023 GB 202313324

(71) Applicant: **Nokia Technologies Oy**
**02610 Espoo (FI)**

(72) Inventors:
• **LAAKSONEN, Lasse Juhani**
**Tampere (FI)**
• **RÄMÖ, Anssi Sakari**
**Tampere (FI)**
• **LEHTINIEMI, Arto Juhani**
**Lempäälä (FI)**

(74) Representative: **Nokia EPO representatives**
**Nokia Technologies Oy**
**Karakaari 7**
**02610 Espoo (FI)**

(54) **SPATIAL AUDIO**

(57)     There is herein provided a method comprising capturing spatial audio signals by a plurality of microphones using a first capture setting and generating a set of audio encoder input format data comprising a representation of the spatial audio signals and associated metadata, the metadata including, in part, a set of descriptive metadata indicative of one or more capture parameters associated with the first capture setting. The method further comprises providing the set of audio encoder input format data to an audio encoder for encoding the representation of the spatial audio signals and the associated metadata to a bitstream for a current streaming session and transmitting the bitstream to one or more remote devices for rendering the representation of the spatial audio signals based, at least in part, on the set of descriptive metadata. The method further comprises determining, during the current streaming session, that the first capture setting changes to a second capture setting and in response to the determination that the first capture setting changes to a second capture setting, and while transmitting the bitstream, the means for capturing spatial audio signals is configured to capture spatial audio signals using the second capture setting and the means for generating the audio encoder input format data is configured to change at least one of the one or more capture parameters of the set of descriptive metadata to be associated with the second capture setting.

FIG. 1A

FIG. 1B

EP 4 517 748 A1

**Description**

**Field**

Example embodiments may relate to systems, methods and/or computer programs for providing spatial audio. In particular, some embodiments relate to the transmission of spatial audio signals and associated metadata.

**Background**

Spatial audio signals are being used in greater frequency to produce a more immersive audio experience. Spatial audio refers to 3D audio, i.e., it can provide a percept where sound sources are heard from different directions. Spatial audio can be reproduced, e.g., using a loudspeaker setup or via headphones, preferably with head-tracking capability. A stereo or multi-channel recording can be passed from the recording or capture apparatus to a listening apparatus and replayed using a suitable multi-channel output such as a multi-channel loudspeaker arrangement and using binaural rendering or virtual surround processing on a pair of stereo headphones or headset.

It may be possible for mobile apparatus such as mobile phone to have more than two microphones. This offers the possibility to record real multichannel audio. With advanced signal processing it is further possible to beamform or directionally amplify or process the audio signal captured by the microphones from a specific or desired direction.

The captured audio signals may comprise metadata to provide greater adaptability of spatial audio signals.

**Summary**

The scope of protection sought for various embodiments of the invention is set out by the independent claims. The embodiments and features, if any, described in this specification that do not fall under the scope of the independent claims are to be interpreted as examples useful for understanding various embodiments of the invention.

According to a first aspect, there is described an apparatus comprising: means for capturing spatial audio signals by a plurality of microphones using a first capture setting; means for generating a set of audio encoder input format data comprising a representation of the spatial audio signals and associated metadata, the metadata including, in part, a set of descriptive metadata indicative of one or more capture parameters associated with the first capture setting; means for providing the set of audio encoder input format data to an audio encoder for encoding the representation of the spatial audio signals and the associated metadata to a bitstream for a current streaming session; means for transmitting the bitstream to one or more remote devices for rendering the representation of the spatial audio signals based, at least in part, on the set of descriptive metadata; and means for determining, during the current streaming session, that the first capture setting changes to a second capture setting, wherein, in response to the determination that the first capture setting changes to a second capture setting, and while transmitting the bitstream, the means for capturing spatial audio signals is configured to capture spatial audio signals using the second capture setting and the means for generating the audio encoder input format data is configured to change at least one of the one or more capture parameters of the set of descriptive metadata to be associated with the second capture setting.

In some embodiments, the means for determining that the first capture setting changes to the second capture setting is configured to determine that the orientation of the apparatus has changed from a first orientation to a second orientation.

In some embodiments, the means for determining that the first capture setting changes to the second capture setting is configured to determine that an input request has been received to change the first capture setting to the second capture setting.

In some embodiments, the apparatus further comprises means for transmitting the set of descriptive metadata indicative of one or more capture parameters associated with the first capture setting to the one or more remote devices via an out-of-band signal.

In some embodiments the one or more capture parameters comprises at least one of: a directional element comprising a number of directions described by the spatial metadata; a channel element comprising a number of transport channels supported by the apparatus; a source format describing a configuration of the apparatus; and a variable description describing at least one of a capture type, an angle between two microphones of the plurality of microphones, an apparatus size and a microphone polar pattern including omnidirectional, cardioid, hypercardioid, or supercardioid patterns.

In some embodiments, the bitstream for the current streaming session comprises the one or more capture parameters.

In some embodiments, the means for generating the set of audio encoder input format data is configured to use a metadata-assisted spatial audio, MASA, format.

In some embodiments, the audio encoder is an immersive voice and audio services, IVAS, codec.

In some embodiments, the apparatus comprises a user device.

According to a second aspect, there is described an apparatus comprising: means for receiving a bitstream for a current streaming session; means for decoding the bitstream for the current streaming session, to determine a representation of spatial audio signals and associated metadata, the metadata including, in part, a set of descriptive metadata indicative of one or more capture parameters associated with a first capture setting; means for configuring an audio renderer according to the decoded descriptive metadata; means for providing the representation of the spatial audio signals to the audio renderer for rendering to produce a rendered audio output signal; means for outputting the rendered audio output signal by a plurality of speakers; means for receiving an updated bitstream for the current streaming session and means for decoding the updated bitstream for the current streaming session, to determine an updated representation of spatial audio signals and associated metadata, the metadata including, in part, a set of descriptive metadata indicative of one or more capture parameters associated with a second capture setting, wherein the means for configuring the audio renderer according to the decoded descriptive metadata is configured to change at least one of the one or more capture parameters of the set of descriptive metadata to be associated with the second capture setting.

In some embodiments, the apparatus further comprises means for receiving a bitstream for a current streaming session receives the bitstream.

In some embodiments, the apparatus further comprises means for receiving the set of descriptive metadata indicative of one or more capture parameters associated with the first capture setting to the one or more remote devices via an out-of-band signal;

and wherein the means for configuring the audio renderer further comprises configuring the audio renderer according to the set of descriptive metadata indicative of one or more capture parameters associated with the first capture setting.

In some embodiments, the apparatus comprises a user device.

According to a third aspect, there is described a method comprising: capturing spatial audio signals by a plurality of microphones using a first capture setting; generating a set of audio encoder input format data comprising a representation of the spatial audio signals and associated metadata, the metadata including, in part, a set of descriptive metadata indicative of one or more capture parameters associated with the first capture setting; providing the set of audio encoder input format data to an audio encoder for encoding the representation of the spatial audio signals and the associated metadata to a bitstream for a current streaming session; transmitting the bitstream to one or more remote devices for rendering the representation of the spatial audio signals based, at least in part, on the set of descriptive metadata; and determining, during the current streaming session, that the first capture setting changes to a second capture setting, wherein, in response to the determination that the first capture setting changes to a second capture setting, and while transmitting the bitstream, capturing spatial audio signals comprising capturing spatial audio signals using the second capture setting and generating the audio encoder input format data comprises changing at least one of the one or more capture parameters of the set of descriptive metadata to be associated with the second capture setting.

According to a fourth aspect, there is described a method comprising: receiving a bitstream for a current streaming session; decoding the bitstream for the current streaming session, to determine a representation of spatial audio signals and associated metadata, the metadata including, in part, a set of descriptive metadata indicative of one or more capture parameters associated with a first capture setting; configuring an audio renderer according to the decoded descriptive metadata; providing the representation of the spatial audio signals to the audio renderer for rendering to produce a rendered audio output signal; outputting the rendered audio output signal by a plurality of speakers; receiving an updated bitstream for the current streaming session and decoding the updated bitstream for the current streaming session, to determine an updated representation of spatial audio signals and associated metadata, the metadata including, in part, a set of descriptive metadata indicative of one or more capture parameters associated with a second capture setting, wherein configuring the audio renderer according to the decoded descriptive metadata comprises changing at least one of the one or more capture parameters of the set of descriptive metadata to be associated with the second capture setting.

According to a fifth aspect, there is provided a computer program product comprising a set of instructions which, when executed on an apparatus, is configured to cause the apparatus to carry out the method of any preceding method definition.

According to a sixth aspect, there is provided a non-transitory computer readable medium comprising program instructions stored thereon for performing a method, comprising: capturing spatial audio signals by a plurality of microphones using a first capture setting; generating a set of audio encoder input format data comprising a representation of the spatial audio signals and associated metadata, the metadata including, in part, a set of descriptive metadata indicative of one or more capture parameters associated with the first capture setting; providing the set of audio encoder input format data to an audio encoder for encoding the representation of the spatial audio signals and the associated metadata to a bitstream for a current streaming session; transmitting the bitstream to one or more remote devices for rendering the representation of the spatial audio signals based, at least in part, on the set of descriptive metadata; and determining, during the current streaming session, that the first capture setting changes to a second capture setting, wherein, in response to the determination that the first capture setting changes to a second capture setting, and while transmitting the bitstream, capturing spatial audio signals comprising capturing spatial audio signals using the second capture setting and generating the audio encoder input format data comprises changing at least one of the one or more capture parameters of the set of descriptive metadata to be associated with the second capture setting.

According to a seventh aspect, there is provided a non-transitory computer readable medium comprising program instructions stored thereon for performing a method, comprising: receiving a bitstream for a current streaming session; decoding the bitstream for the current streaming session, to determine a representation of spatial audio signals and associated metadata, the metadata including, in part, a set of descriptive metadata indicative of one or more capture parameters associated with a first capture setting; configuring an audio renderer according to the decoded descriptive metadata; providing the representation of the spatial audio signals to the audio renderer for rendering to produce a rendered audio output signal; outputting the rendered audio output signal by a plurality of speakers; receiving an updated bitstream for the current streaming session and decoding the updated bitstream for the current streaming session, to determine an updated representation of spatial audio signals and associated metadata, the metadata including, in part, a set of descriptive metadata indicative of one or more capture parameters associated with a second capture setting, wherein configuring the audio renderer according to the decoded descriptive metadata comprises changing at least one of the one or more capture parameters of the set of descriptive metadata to be associated with the second capture setting.

## Brief Description of the Drawings

Example embodiments will now be described by way of non-limiting example, with reference to the accompanying drawings, in which:

FIG. 1A is a plan view of a first apparatus in a first orientation to which one or more example embodiments may be applied;
FIG. 1B is a plan view of the FIG. 1A first apparatus in a second orientation;
FIG. 2 is a view of the first apparatus in use with a user;
FIG. 3A is a plan view of a first apparatus in a first orientation to which one or more example embodiments may be applied;
FIG. 3B is a plan view of a first apparatus in a second orientation to which one or more example embodiments may be applied;
FIG. 3C is a plan view of a first apparatus in a third orientation to which one or more example embodiments may be applied;
FIG. 4 is a view of the first apparatus held by a user's hand;
FIG. 5 is a plan view of a third apparatus to which one or more example embodiments may be applied;
FIG. 6 is a flow diagram illustrating method steps that may be performed by an apparatus according to one or more example embodiments;
FIG. 7 is a flow diagram illustrating method steps that may be performed by an apparatus according to one or more further example embodiments;
FIG. 8 is a flow diagram illustrating processing operations that may be performed by an apparatus according to one or more example embodiments;
FIG. 9 is a flow diagram illustrating processing operations that may be performed by an apparatus according to one or more further example embodiments;
FIG. 10 is a flow diagram illustrating processing operations that may be performed by an apparatus according to one or more further example embodiments;
FIG. 11 shows an apparatus according to one or more example embodiments; and
FIG. 12 shows a non-transitory medium for storing computer-readable code or instructions which, when executed by an apparatus such as that of FIG. 1, may perform processing operations described herein.

## Detailed Description

Example embodiments relate to an apparatus, method and computer program for output of stereo or spatial audio. Stereo or spatial audio may be represented by data in any suitable form, whether in the form of one or more data files or, in the case of streaming data, data packets or any other suitable format. The stereo or spatial audio may relate to voice and other audio communications.

In its basic form, stereo audio data comprises two channels, left and right, for output by respective first and second loudspeakers. More advanced formats include 2.1, which adds lower frequencies for output to a third, subwoofer loudspeaker, as well as 5.1 and 7.1 which may be generally known as "surround sound" formats. Spatial audio data, also called three dimensional audio or immersive audio, may describe audio data that enables users to perceive sounds from all around them; for a fully-immersive experience, the spatial audio data may include cues so that users can perceive other properties such as directions of sounds emitted by one or more sound sources or objects, trajectories of the sound sources or objects, variations of sound magnitudes based on changing distance from the sound sources or objects, and other sound effects. For example, if a user moves their user device, e.g., their smartphone, this may change how the audio is perceived.

As used herein, the apparatus may comprise a user device having three or more microphones. The user device may be a portable user device, for example a smartphone, a tablet computer, digital assistant, wearable computer or head mounted device (HMD). This list is not exhaustive. The user device may also comprise loudspeakers.

User devices may have different form factors. For example, some user devices have multiple screens, some have three or more microphones and/or some may be foldable, i.e., having a foldable body carrying a foldable screen for use in both open and closed configurations and possibly in one or more intermediate configurations in which the screen is at some angle between the open and closed configurations. Some user devices may be used in different orientations, e.g., changing a user interface from a portrait mode to a landscape mode upon detecting rotation of the user device beyond 45 degrees of the horizontal plane or thereabouts. User devices may be configured to receive and decode different types of audio data, including monaural audio data, stereoscopic (stereo) audio data comprising two channels, other forms of multi-channel audio data, e.g., 2.1, 5.1 and 7.1 and spatial audio data, e.g., Ambisonics or metadata-assisted spatial audio (MASA).

User devices may be capable of establishing a communications session with one or more other user devices, servers and/or nodes via a communications network. A user device may be configured to transmit and receive data using protocols for 3G, 4G, LTE, 5G or any future generation communication protocol. A user device may comprise means for short-range communications using, for example, Bluetooth, Zigbee or WiFi. The user device may comprise one or more antennas for communicating with external devices, for example one or more other remote user devices and/or one or more remote servers and/or one or more communications nodes of a network.

In use, a user device may process and output different types of audio data. For example, a user device may output stereo audio data associated with a music track or movie to first and second loudspeakers. Upon receipt of other audio data, i.e., audio data not being the stereo audio data currently being output to the first and second loudspeakers, this is usually output by one or both of the first and second loudspeakers. For example, upon receipt of a new text or multimedia message, an audible notification may be output to one or both of the first and second loudspeakers. The two types of audio data are mixed, at least for some period of time.

The same or similar situation may be true for other types of data such as incoming call or conference notifications. Indeed, sometimes output of the other audio data may pause, mute or reduce the volume of the stereo audio data, at least for some period of time. Example embodiments are aimed at improved flexibility and user experience for user devices where there are three or more loudspeakers and/or microphones. For example, example embodiments may enable utilization of one or more loudspeakers that are currently not in use. For example, example embodiments may enable optimized audio output, e.g., stereo widening effects, enhanced immersivity and/or increased volume. Other advantages will become apparent.

Spatial audio refers to 3D audio. Spatial audio includes a perception of where sound sources are heard from different directions and replicated the audio to a user. Spatial audio can be reproduced, for example, using a loudspeaker setup or via headphones. Optionally, spatial audio rendering can utilize head-tracking capability.

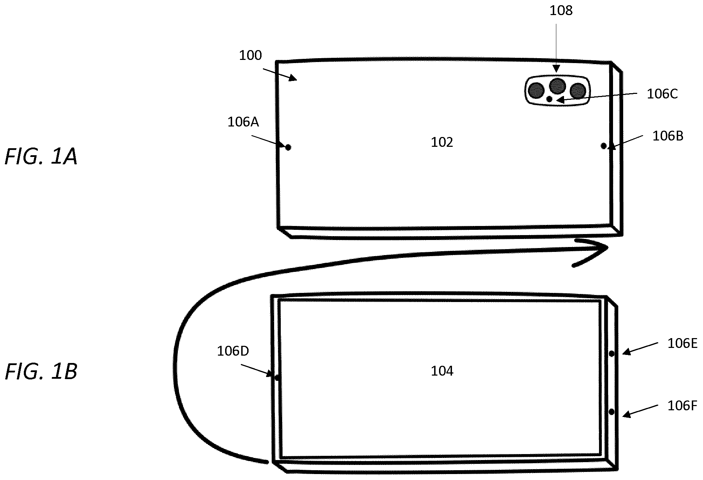

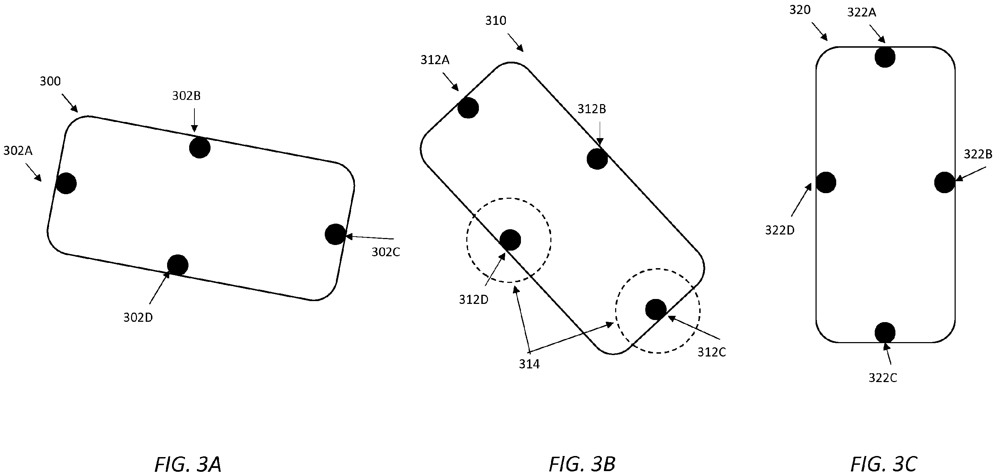

Spatial capture is possible using various means. For example, a multi-microphone device such as a smartphone can be used to capture spatial audio. FIG. 1A is a plan view of a first apparatus 100 in a first orientation according to which one or more example embodiments may be applied. The apparatus 100 of FIG. 1A is a smartphone shown from behind. The smartphone apparatus 100 comprises a back 102, front 104, microphones 106A-106F and a camera 108. FIG. 1B is a plan view of the FIG. 1A first apparatus in a second orientation. The apparatus 100 of Fig 1B, is the smartphone of FIG. 1A flipped such that the front 104 is showing. The front 104 of the smartphone may comprise a touchscreen. Microphones 106A, 106B and 106C are located on the back 102 of the apparatus and microphones 106D, 106E and 106F are located on the front 104 of the apparatus. The apparatus shown in FIG. 1A and FIG. 1B is merely an example, the microphones may be alternatively arranged in other configurations such as shown in FIGS. 3 to 5. The camera 108 is located on the back 102 of the apparatus and, optionally, there may also be a camera present on the front 104 of the apparatus (not shown). At least one of the microphones 106C may be located alongside the camera 108.

The apparatus of FIG. 1a and 1b can use parametric capture means to analyse and process audio input signals received at the microphones 106A-106F and thus derive either a parametric spatial audio format or synthesize some other spatial audio format. The smartphone has integrated microphones 106A-106F with a placing that allows for good voice pickup in different orientations and use cases. Microphone separation along each of the three main axis is preferred for good spatial audio capture and processing, however, in thin devices microphone separation along only two of the axis is needed.

The apparatus may be a user device, or user equipment UE, which typically refers to a portable computing device that includes wireless mobile communication devices operating with or without a subscriber identification module (SIM), including, but not limited to, the following types of devices: a mobile station (mobile phone), smartphone, personal digital assistant, handset, device using a wireless modem (alarm or measurement device, etc.), laptop and/or touch screen computer, tablet, game console, notebook, and multimedia device. It should be appreciated that a user device may also be a nearly exclusive uplink only device, of which an example is a camera or video camera loading images or video clips to a network. A user device may also be a device having capability to operate in Internet of Things (IoT) network which is a scenario in which objects are provided with the ability to transfer data over a network without requiring human-to-human or human-to-computer interaction.

Metadata-assisted spatial audio (MASA) is a parametric spatial audio format, known from the ongoing 3GPP standardization of the Immersive Voice and Audio Services (IVAS) codec and specified in Annex A of 3GPP TS 26.258. For example, Ambisonics is a spatial audio format that is non-parametric. MASA is a format of spatial audio and meta data may be obtained by analysis of the microphone signals. The MASA format consists of audio signals and metadata. The audio signals can be mono or stereo (i.e., 1-2 transport channels). The metadata comprises descriptive metadata and spatial metadata. Examples of descriptive metadata and spatial metadata are given below in detail:

*Table A.1: MASA format descriptive common metadata parameters*

| Field | Bits | Description |
|---|---|---|
| Format descriptor | 64 | Defines the MASA format for IVAS. Eight 8-bit ASCII characters:<br>01001001, 01010110, 01000001, 01010011, 01001101, 01000001, 01010011, 01000001<br>Values stored as 8 consecutive 8-bit unsigned integers. |
| Channel audio format | 16 | Combined following fields stored in two bytes.<br>Value stored as a single 16-bit unsigned integer. |
| Number of directions | (1) | Number of directions described by the spatial metadata.<br>Each direction is associated with a set of direction dependent spatial metadata.<br>Range of values: [1, 2] |
| Number of channels | (1) | Number of transport channels in the format.<br>Range of values: [1, 2] |
| Source format | (2) | Describes the original format from which MASA was created. |
| (Variable description) | (12) | Further description fields based on the values of 'Number of channels' and 'Source format' fields.<br>When all bits are not used, zero padding is applied. |

*Table A.2a: MASA format spatial metadata parameters (dependent of number of directions)*

| Field | Bits | Description |
|---|---|---|
| **Direction index** | 16 | Direction of arrival of the sound at a time-frequency parameter interval. Spherical representation at about 1-degree accuracy.<br>Range of values: "covers all directions at about 1° accuracy"<br>Values stored as 16-bit unsigned integers. |
| **Direct-to-total energy ratio** | 8 | Energy ratio for the direction index (i.e., time-frequency subframe).<br>Calculated as energy in direction / total energy.<br>Range of values: [0.0, 1.0]<br>Values stored as 8-bit unsigned integers with uniform spacing of mapped values. |
| **Spread coherence** | 8 | Spread of energy for the direction index (i.e., time-frequency subframe).<br>Defines the direction to be reproduced as a point source or coherently around the direction.<br>Range of values: [0.0, 1.0]<br>Values stored as 8-bit unsigned integers with uniform spacing of mapped values. |

*Table A.2b: MASA format spatial metadata parameters independent of number of directions)*

| Field | Bits | Description |
|---|---|---|
| **Diffuse-to-total energy ratio** | 8 | Energy ratio of non-directional sound over surrounding directions. Calculated as energy of non-directional sound / total energy. Range of values: [0.0, 1.0] (Parameter is independent of number of directions provided.) Values stored as 8-bit unsigned integers with uniform spacing of mapped values. |
| **Surround coherence** | 8 | Coherence of the non-directional sound over the surrounding directions. Range of values: [0.0, 1.0] (Parameter is independent of number of directions provided.) Values stored as 8-bit unsigned integers with uniform spacing of mapped values. |
| **Remainder-to-total energy ratio** | 8 | Energy ratio of the remainder (such as microphone noise) sound energy to fulfil requirement that sum of energy ratios is 1. Calculated as energy of remainder sound / total energy. Range of values: [0.0, 1.0] (Parameter is independent of number of directions provided.) Values stored as 8-bit unsigned integers with uniform spacing of mapped values. |

Table A.1 presents the MASA descriptive common metadata parameters in order of writing. Table A.2a and Table A.2b present the MASA spatial metadata parameters dependent and independent of the number of directions, respectively.

The MASA spatial metadata describes the spatial audio characteristics corresponding to the one or two transport audio signals. Thus, the spatial audio scene can be rendered for listening based on the combination of the transport audio signals and the spatial metadata.

The definitions and use of the MASA spatial metadata parameters are described in order in the following.

### *Direction index: Spatial direction(s)*

Spatial directions represent the directional energy flows in the sound scene. Each spatial direction together with corresponding direct-to-total energy ratio describes how much of the total energy for each time-frequency tile is coming from that specific direction. In general, this parameter can also be thought of as the direction of arrival (DOA).

There can be one or two spatial directions for each time-frequency tile in the input metadata. Each spatial direction is represented using a 16-bit direction index. This is an efficient representation of directions as points of a spherical grid with an accuracy of about 1 degree in any arbitrary direction.

The direction indexing corresponds to the function for transforming the audio direction angular values (azimuth $\phi$ and elevation $\theta$) into an index, and the inverse function for transforming the index into the audio direction angular values.

Each pair of values containing the elevation and the azimuth is first quantized on a spatial spherical grid of points and the index of the corresponding point is constructed. The structure of the spherical grid is defined first, followed by the quantization function and lastly the index formation followed by the corresponding de-indexing function.

The spherical grid is defined as a succession of horizontal circles of points. The circles are distributed on the sphere, and they correspond to several elevation values. The indexing functions make the connection between the angles (elevation and azimuth) corresponding to each of these points on the grid and a 16-bit index.

The spherical grid is on a sphere of unitary radius that is defined by the following elements:

- The elevation values are equidistant between -90 and +90 degrees; the value 0 is represented and corresponds to the circle situated on the equator. The values are symmetrical with respect to the origin. The number of positive elevation values is $N_\theta = 122$.

- For each elevation value there are several equally spaced azimuth values. One point on the grid is given by the elevation and the azimuth value. The number $n(i)$ of azimuth values is calculated as follows:

  ∘ on the equator of the spherical grid ($\theta = 0$) it is set to

$$n(1) = 430$$

  ∘ there is one point at each of the poles ($\theta = \pm 90$ degrees)

$$n(N_\theta) = 1$$

○ the function calculating the number of points n(i) on the grid for other elevation indices, $i = 2, ..., N_\theta$ - 1, uses the following definition:

$$n(i) = \frac{\big(cumN(i) - cumN(i-1)\big)}{2}$$

with *cumN*(1) = 0 and

$$cumN(i) = 2 \; round_i \left( \frac{2^{16} - 432}{2} \frac{\sin\left((i - \frac{1}{2})\delta\right) - \sin\left(\frac{\delta}{2}\right)}{\sin\left((N_\theta - \frac{3}{2})\delta\right) - \sin\left(\frac{\delta}{2}\right)} \right)$$

where $\delta$ is the uniform quantization step for $i = 1, ..., N_\theta$ - 1, 2 *round*$_i$(*x*/2) is a rounding function to the nearest even integer (above *x* for $i = 2$, closest for $i > 2$). The term *cumN*(*i*) gives the cumulative cardinality (i.e., cumulative number of points in the spherical grid) in a spherical zone going from the first non-zero elevation value to the *i*-th elevation value. This cumulative cardinality is derived from the relative area on the spherical surface, assuming a (near) uniform point distribution of the remaining number of points $2^{16}$ - 432 (let alone the equator and poles).

- The azimuth values start from the front direction and are in trigonometrical order from 0 to $2\pi$.
- The quantized azimuth values for odd values of *i* are equally spaced and start at o.
- The quantized azimuth values for even values of *i* are equally spaced and start at $\frac{\pi}{n(i)}$ .
- There is a same number of quantized azimuth values for same absolute value elevation codewords.

The quantization in the spherical grid is done as follows:

- The elevation value is quantized in the uniform scalar quantizer to the two closest values $\theta_1, \theta_2$
- The azimuth value is quantized in the azimuth scalar quantizers corresponding to the elevation values $\theta_1, \theta_2$
- The distance on the sphere is calculated between the input elevation azimuth pair and each of the quantized pairs ($\theta_1$, $\phi_1$), ($\theta_2$, $\phi_2$)

$$d_i = -(\sin\theta\sin\theta_i + \cos\theta_i\cos(\phi - \phi_i)), i = 1:2$$

- The pair with lower distance is chosen as the quantized direction.

The resulting quantized direction index is obtained by enumerating the points on the spherical grid by starting with the points for null elevation first, then the points corresponding to the smallest positive elevation codeword, the points corresponding to the first negative elevation codeword, followed by the points on the following positive elevation codeword and so on.

Direct-to-total energy ratio(s)

Direct-to-total energy ratios work together with spatial directions as described above. Each direct-to-total energy ratio corresponds to a specific spatial direction and describes how much of the energy comes from that specific spatial direction compared to the total energy.

Spread coherence

Spread coherence is a parameter that describes the directional energy flow further. It represents situations where coherent directional sound energy is coming from multiple directions at the same time. This is represented with a single spread coherence parameter that describes how the sound should be synthesized.
In synthesis, this parameter should be used such that value 0 means that the sound is synthesized to single direction as directed by the spatial direction, value 0.5 means that the sound is synthesized to the spatial direction and two surrounding directions as coherent, and 1 means that the sound is synthesized to two surrounding directions around the spatial direction.

Diffuse-to-total energy ratio

Diffuse-to-total energy ratio represents non-directional energy flow in the sound scene. This is a complement to the direct-to-total energy ratios and in an ideal capture with no undesired signal (or synthesized sound scene), the diffuse-to-total ratio value is always

$$r_{diff} = 1 - \sum r_{dir}.$$

Surround coherence

Surround coherence is a parameter that describes the non-directional energy flow. It represents how much of the non-directional energy should be presented as coherent reproduction instead of decorrelated reproduction.

Remainder-to-total energy ratio

Remainder-to-total represents all the energy that does not "belong" to the captured sound scene based on the used model. This includes possible microphone noise and other capture artefacts that have not been removed from the signal in pre-processing. This means that by considering the direct-to-total energy ratio, the diffuse-to-total energy ratio, and the remainder-to-total energy we end up with a complete energy ratio model of

$$\sum_{m}^{M} r_{dir}(m) + r_{diff} + r_{rem} = 1$$

when there is any remainder energy present.

The spatial metadata describes how spatial rendering is done, i.e., from which direction certain time-frequency component should be renderer, etc. This defines the sound scene (together with the audio). The descriptive metadata provides additional information, e.g., on how the spatial capture or spatial audio generation was done. This information can be used to optimize encoding in certain cases, and it can be used to improve rendering quality in advanced rendering, when the information is made available at the receiver. For this to happen, the information needs to be passed though the transmission channel, e.g., using the codec bitstream, RTP signaling, or any other suitable method.

Channel audio format in MASA descriptive metadata defines the number of directions in MASA metadata (1-2), the number of channels (1-2 transport channels), and the source format (unknown source format including mixes (default value); microphone grid, e.g., smartphone or other such UE; channel-based source (e.g., 5.1); or Ambisonics). In addition, there is a so-called variable description. All this information in a session can be constant/fixed, however, the information is provided in each frame, i.e., once per 20ms and it can thus vary often. Depending on the exact source format value (and number of transport channels), the variable description provides, e.g.: transport channel polar pattern information, channel angles for the directive patterns, and channel distance information.

Spatial audio capture can be done in many different usage scenarios. For example, regular spatial audio call, spatial audio with audio focus, and spatial audio capture in a rich ambience generally require somewhat different means and settings for optimal capture, encoding, and rendering. In capture, this is up to the implementor, and many solutions may exist. On the other hand, anything related to encoding needs to be available for the codec, and for anything related to rendering, the information needs to be made available for the receiving UE.

If these optimizations and adaptations are not fully considered, the resulting user experience, such as the rendered spatial audio quality, can always be compromised to some degree. Thus, overall improvement is necessary. It is noted that IVAS MASA format provides a mechanism to adapt several rendering-related aspects via 50Hz update rate for the descriptive metadata and delivering immersive voice and audio capture optimizations can then be done using IVAS codec in a suitable way.

The present disclosure relates to spatial audio capture, encoding, transmission, and rendering, where a method is proposed to enable rendering quality improvements in spatial audio communications and real-time streaming by configuring and adding descriptive metadata parameters that correspond to the selected spatial audio capture mode and/or the targeted effect, which achieves providing real-time information describing specific properties of the spatial audio capture setup and/or the targeted spatial audio effect to the spatial audio renderer. Utilization of the transmitted descriptive metadata parameters is based on the specific renderer implementation of the receiving device. Thereby, the present disclosure makes it possible to provide audio capture parameters that are synchronized with the corresponding spatial audio representation to a renderer via a codec bitstream or out-of-band signaling.

The adaptive audio capture parameters can in examples, e.g., indicate a separation of an audio-focused source or sources for improved rendering control in playback.

The adaptive audio capture parameters can in further examples, e.g., indicate a change in at least one of: capture microphone polar patterns, angle between the beams, and distance between the stereo channels. This information can be used in rendering to, for example, modify rendering such that the changes become inaudible for a user to maintain rendering regardless of changes in capture or such that the changes are made more pronounced to make the effect stronger.

The rendering control is thus improved significantly leading to improved user experience. Specifically, the current disclosure is described in context of the IVAS MASA input format, and the disclosure can be implemented as part of an enhanced MASA audio capture system. According to the provided IVAS implementation, the adaptation rate for the system is 50Hz based on the IVAS frame size and MASA metadata definitions. For example, out-of-band signaling, in preferred examples, Real-time Transport Protocol (RTP) can be used to transmit the information at least substantially synchronized with the audio codec bitstream. While the adaptation rate at input can be 50Hz, the transmitted update rate can be same or lower.

The present disclosure relates to real-time adaptation of descriptive metadata in a parametric spatial audio format for encoding and transmission in spatial audio communications and streaming use cases and services. Specifically, the codec can be the 3GPP IVAS codec, the parametric audio format can be the MASA format, and the adapted part of the descriptive metadata can contain the Channel audio format including the Source format description comprising Transport definition, Channel angles and Channel distance, while Number of channels can be (at least predominantly) 2 and Number of directions can be 1 or 2.

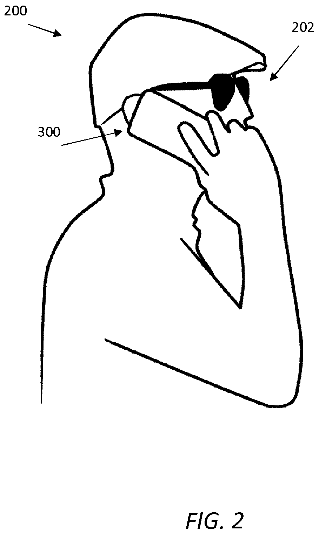

FIG. 2 is a view 200 of the first apparatus 300 in use with a user 202 in a first capture setting. The first capture setting is shown in FIG. 2 as handset mode, where the apparatus 100 is held against the user's ear during a phone call. FIG. 3A is a plan view of the apparatus 100 in a first orientation 300. FIG. 3B is a plan view of the first apparatus in a second orientation 310. FIG. 3C is a plan view of a first apparatus in a third orientation 320. As shown in FIG.2 and FIG 3A-3C the user 202 is making a media call with the apparatus 100 in handset mode. A spatial audio capture and transmission is made according to first capture settings. As shown in FIG.3A microphones 302A-302D may be used for spatial audio analysis. The same microphones are shown in FIG.3B denoted by 312A-312D and in FIG. 3C denoted by 322A-322D. At least two channels 314 that are received by the microphones are selected as transport channels allowing for good voice pickup and left-right separation for transport channels. The two channels 314 picked as transport channels may be those closest to the user's mouth when talking into the apparatus 300. The two channels that are chosen as transport channels may vary according to the orientation of the apparatus.

In handset mode, the apparatus 100 can have several different orientations (e.g., the first 300, second 310 and third orientations 320 shown in FIGS. 3A-3C). Generally, a somewhat upright orientation (portrait) is typical. All of FIG 3A-3C show the apparatus in handset mode and therefore using the first capture setting. Handset mode may in some examples encompass an orientation range angle through 90 degrees.

The user 202 can first be on a media call with the apparatus 100 (e.g., mobile phone) against their ear, i.e., user is capturing a spatial audio signal with no video in handset mode and the first capture setting is used in this case. The microphone 302A-302D placement and resulting selection are understood as one example only. In an example where there are four microphones 302A-302D, one microphone may be placed in the center of each side of the apparatus. An example capture first selects and maintains the following parameters in MASA descriptive metadata:

- Number of directions (1 bit) is set to '0' or '1' according to the capture implementation. (We note that capturing a single direction, i.e., value '0' is likely sufficient regardless of the device capability in this scenario.)
- Number of channels (1 bit) is set to '2' according to the capture system supporting 2 transport channels.
- Source format (2 bits) is set according to the specific system. For a smartphone, the configuration may be, e.g., '10' or '00' depending on exact configuration and manufacturer design choice.
- Variable description (12 bits) is set, e.g., to '001000011100', where:

    ○ '001' indicates selection of omni capture, which is typical in smartphones, e.g., for voice-centric capture,
    ○ '000' indicates an unspecified angle between the transport channels, and
    ○ '011100' indicates channel distance of about 7 cm corresponding with this specific xample device size and its microphone placement for the transport channels in an (at least relatively) upright configuration in handset mode.

As will be appreciated, many MASA formats may conceivably be used, however the above represents one example MASA format.

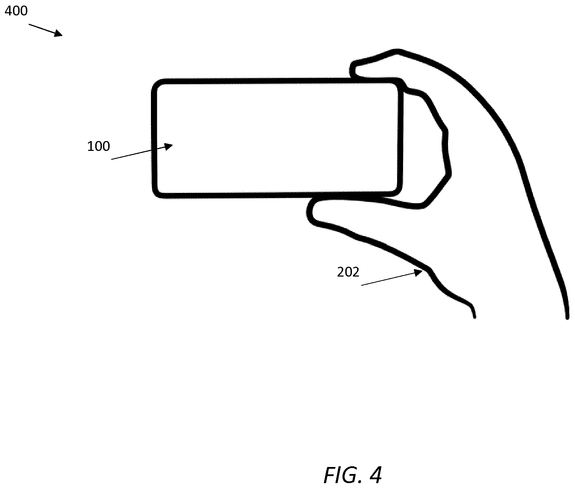

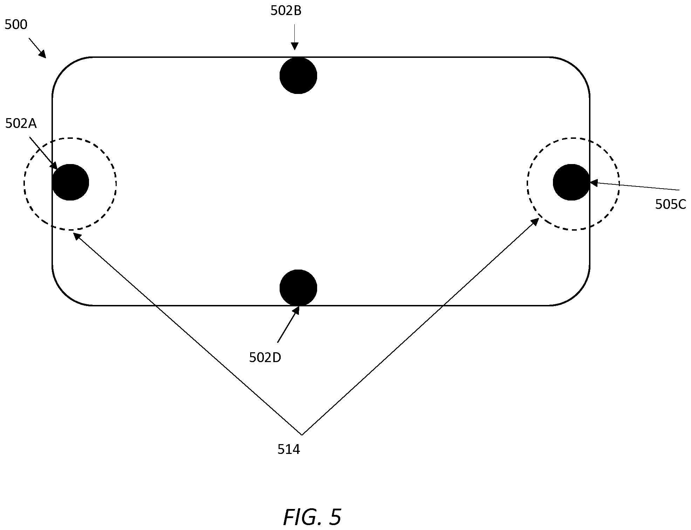

When finished with the media call the user 202 then changes the apparatus 100 orientation to capture further audio (e.g., landscape orientation, see FIG. 4) and introduce a video component to their media call. For example, there is a musical performance that user wishes to show to the recipient. FIGs. 4 and 5 represent the apparatus being held in an alternative orientation 400, 500. The microphone 502A-502D placement and resulting selection are understood as one example only and other possible use case scenarios are conceivable. The system now determines a new configuration suitable for the change in the use case, the new configuration is known as the second capture setting.

In the second capture setting, the spatial audio signals and corresponding metadata is adapted. The parameters in MASA descriptive metadata can now be as follows, by way of example:

- Number of directions (1 bit) is set to '0' or '1' according to the capture implementation. (We note that capturing two directions, i.e., value '1' can here often provide improved quality if the capture device is capable of this.)
- Number of channels (1 bit) is set to '2' according to the capture system supporting 2 transport channels.
- Source format (2 bits) is set according to the specific system. For a smartphone, the configuration may be, e.g., '10' or '00' depending on exact configuration and manufacturer design choice.
- Variable description (12 bits) is set, e.g., to '011010100111', where:

  ◦ '011' indicates selection of cardioid capture,
  ◦ '010' indicates angles of +/-70° between the transport channels in this configuration, and
  ◦ '100111' indicates channel distance of about 16 cm corresponding with this example device size and its microphone placement for the transport channels in a landscape configuration the user is now using.

Thus, the user triggering recording a video as part of the media call results in different selection of a second capture setting, which may in turn drive new selection of microphone polar pattern configuration and finally the corresponding change in descriptive metadata that is sent to receiving user. In addition, the orientation of the device changes the optimal transport signal selection. Also, this change is made visible to the receiver as part of the parametric format's descriptive metadata.

Thus, it is specifically the first two sub-fields in the "Variable description" that are adapted according to the choice driven by mode selection (audio-only, audio-video) in this example. In addition, the apparatus orientation change results in different transport channel selection of microphones 502A and 502B, which is reflected primarily in the last sub-field value. The new transport channel selection of microphones 502A and 502B is conducted based on the most useful microphones to be used.

This new adaptive behavior of the capture information, when delivered to the receiver, can then be used to optimize the rendering in a suitable renderer implementation. For example, a wider sound stage can be renderer for the music video part. A more subdued spatial scene may be of interest during the handset mode call.

A second example use case (not shown) may also be considered. Audio focus is a feature that allows for pronounced capture of directional sound sources such as talkers in a scene via beamforming. Audio focus can thusly, e.g., suppress some of the background noise or ambience signals to allow for a cleaner capture and reproduction of the talker. For example, user wishes to use audio focus while recording a spatial scene.

Consider that an audio focus algorithm on user's smartphone detects two talkers (or other sound sources of interest) in different parts of the scene and the active signals from these two sound sources are at least partly overlapping in time. For example, it can be useful to be able to concentrate more on one of the audio-focused sources at a given time during the rendering. According to the present disclosure, this can be better achieved by a suitable description of the capture scenario and related capture configuration, which is enabled by adapting the descriptive metadata (i.e., in a second capture setting) and transmitting it to the receiver.

According to the present disclosure, the system now adapts the descriptive metadata according to a second capture setting of the MASA format as follows during a specific portion of the audio focusing spatial audio capture:

- Number of directions (1 bit) is set to '0' or 'i' according to the capture implementation. (We note that in this use case, an implementation that achieves analysis for two directions, i.e., using value '1' can often provide better quality output.)
- Number of channels (1 bit) is set to '2' according to the capture system supporting 2 transport channels.
- Source format (2 bits) is set according to the specific system. For a smartphone, the configuration may be, e.g., '10' or '00' depending on exact configuration and manufacturer design choice.
- Variable description (12 bits) is set, e.g., to '101100100111', where:

  ◦ '101' indicates selection of hypercardioid beam or polar pattern according to the applied audio focus effect,
  ◦ '100' indicates angles of +/-45° according to the audio focus effect, and
  ◦ '100111' indicates channel distance of about 16 cm corresponding with the device size and its microphone placement for the transport channels.

Thus, it is specifically the first two sub-fields in the "Variable description" that are adapted according to the choice driven by the audio focus processing.

This set of information, when delivered to the receiver, can then be used to optimize the rendering in a suitable renderer implementation. For example, listener may be able to control the rendering of the two main sound sources that the audio focus detected and focused on.

A third example use case (not shown) may also be considered. For example, user is in a nice ambience in a forest with birds singing in the trees. The spatial audio capture algorithm on the user's tablet device detects a rich ambience in a 3D sound scene. For example, there can be an AI component that understand in which kind of environment the user is capturing audio. Good settings for the scenario are chosen, e.g., smooth playback with good 3D coverage is suitable.

According to the disclosure, the system selects the capture configuration and adapts the descriptive metadata of the MASA format. As will be appreciated, many MASA formats may conceivably be used, however by way of example an proposed MASA format is shown as follows:

- Number of directions (1 bit) is set to '0' or 'i' according to the capture implementation. (We note that in this use case, an implementation that achieves analysis for two directions, i.e., using value '1' can often provide better quality output.)
- Number of channels (1 bit) is set to '2' according to the capture system supporting 2 transport channels.
- Source format (2 bits) is set according to the specific system. For a smartphone, the configuration may be, e.g., '10' or '00' depending on exact configuration and manufacturer design choice.
- Variable description (12 bits) is set, e.g., to '010001101000', where:

  ◦ '010' indicates selection of subcardioid polar pattern for smooth and expansive ambience playback,
  ◦ '001' indicates angles of +/-90° according to the desired effect, and
  ◦ '101000' indicates channel distance of about 29 cm corresponding with the example device size and its microphone placement for the selected transport channels.

Thus, it is specifically the first two sub-fields in the "Variable description" that are adapted according to the choice driven by the desired effect of smooth playback of an expansive immersive ambience. This generates the second capture setting, which may be different to a first initial capture setting that is used initially by the apparatus.

This set of information, when delivered to the receiver, can then be used to optimize the rendering in a suitable renderer implementation. For example, listener may get better utilization of their multi-channel loudspeaker setup, where there is more content now being played back also from behind the user and from the height channels.

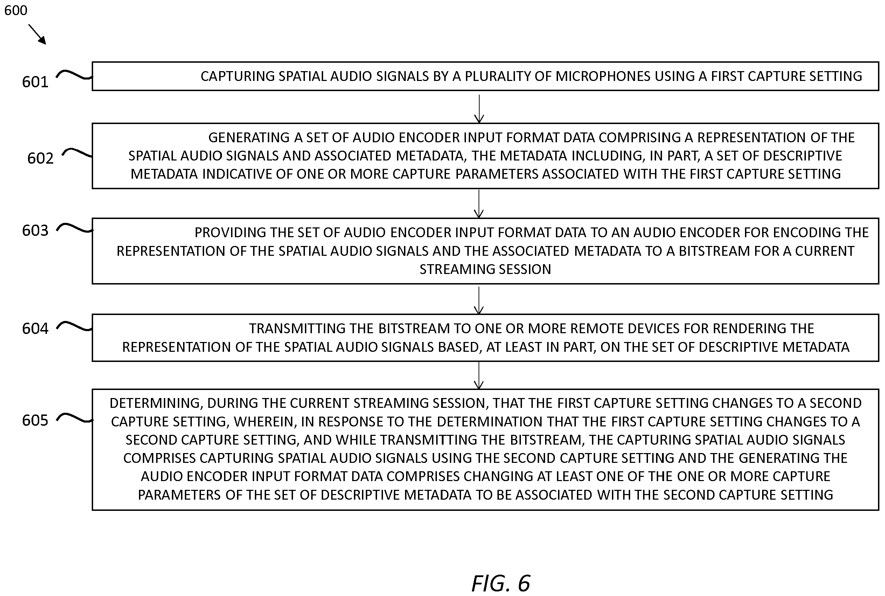

FIG. 6 shows, by way of example, a flowchart of a method according to example embodiments. Each element of the flowchart may comprise one or more operations. The operations may be performed in hardware, software, firmware or a combination thereof. For example, the operations may be performed, individually or collectively, by a means, wherein the means may comprise at least one processor; and at least one memory storing instructions that, when executed by the at least one processor, cause the performance of the operations.

The method 600 comprises a first operation 601 of capturing spatial audio signals by a plurality of microphones using a first capture setting.

The method 600 comprises a second operation 602 of generating a set of audio encoder input format data comprising a representation of the spatial audio signals and associated metadata, the metadata including, in part, a set of descriptive metadata indicative of one or more capture parameters associated with the first capture setting. Generating the set of audio encoder input format data may optionally comprise generating the set of audio encoder input format data is configured to use the MASA format.

The method 600 comprises a third operation 603 of providing the set of audio encoder input format data to an audio encoder for encoding the representation of the spatial audio signals and the associated metadata to a bitstream for a current streaming session. Optionally, the the audio encoder may be the IVAS codec.

The method 600 comprises a fourth operation 604 of transmitting the bitstream to one or more remote devices for rendering the representation of the spatial audio signals based, at least in part, on the set of descriptive metadata.

The method 600 comprises a fifth operation 605 of determining, during the current streaming session, that the first capture setting changes to a second capture setting.

In response to the determining that the first capture setting changes to a second capture setting, and while transmitting the bitstream, capturing spatial audio signals comprising capturing spatial audio signals using the second capture setting and generating the audio encoder input format data comprises changing at least one of the one or more capture parameters of the set of descriptive metadata to be associated with the second capture setting. Optionally, determining that the first capture setting changes to a second capture setting may comprise determining that the orientation of the apparatus has changed from a first orientation to a second orientation. For example, the apparatus may have changed from a handset mode as shown in FIG.2 and FIG.3, to the portrait mode shown in FIG.4 and FIG. 5. Additionally, or alternatively, determining that the first capture setting changes to the second capture setting may comprise determining that an input request has been received to change the first capture setting to the second capture setting, for example, in the scenarios as discussed in the second and third use case. Or alternatively, an AI system may determine that the first capture setting changes to the second capture setting.

The method 600 may further comprise transmitting the set of descriptive metadata indicative of one or more capture parameters associated with the first capture setting to the one or more remote devices. The transmission may be conducted via an out-of-band signal. The capture parameters may comprises at least one of: a directional element comprising a number of directions described by the spatial metadata, a channel element comprising a number of transport channels supported by the apparatus, a source format describing a configuration of the apparatus; and a variable description describing at least one of a capture type, an angle between two microphones of the plurality of microphones, an apparatus size and a microphone polar pattern including omnidirectional, cardiod, hypercardioid, or supercardioid patterns. Optionally, the bitstream for the current streaming session comprises the one or more capture parameters.

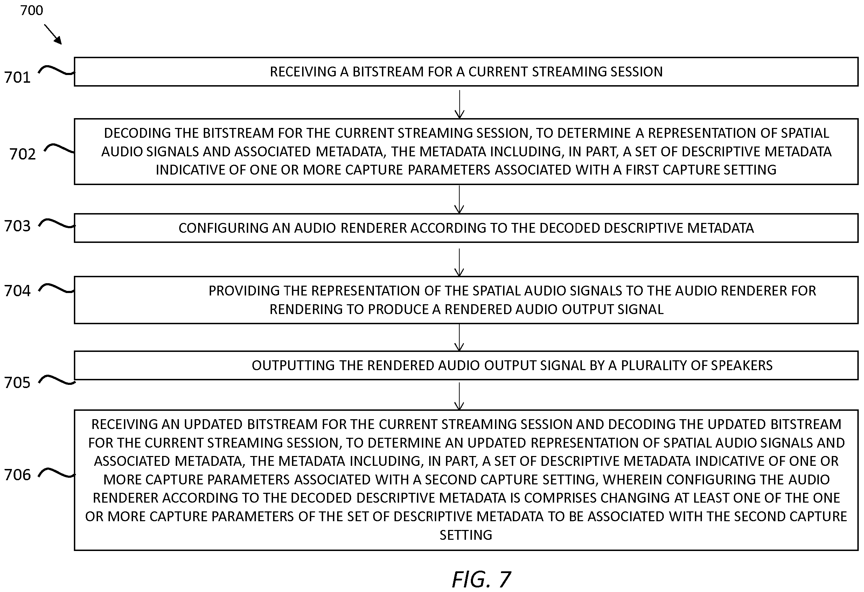

FIG. 7 shows, by way of example, a flowchart of a method according to example embodiments. Each element of the flowchart may comprise one or more operations. The operations may be performed in hardware, software, firmware or a combination thereof. For example, the operations may be performed, individually or collectively, by a means, wherein the means may comprise at least one processor; and at least one memory storing instructions that, when executed by the at least one processor, cause the performance of the operations.

The method 700 comprises a first operation 701 of receiving a bitstream for a current streaming session. Receiving the bitstream for a current streaming session may include receives the bitstream from the apparatus 100 of FIG 1-5.

The method 700 comprises a second operation 702 of decoding the bitstream for the current streaming session, to determine a representation of spatial audio signals and associated metadata, the metadata including, in part, a set of descriptive metadata indicative of one or more capture parameters associated with a first capture setting.

The method 700 comprises a third operation 703 of configuring an audio renderer according to the decoded descriptive metadata.

The method 700 comprises a fourth operation 704 of providing the representation of the spatial audio signals to the audio renderer for rendering to produce a rendered audio output signal.

The method 700 comprises a fifth operation 705 of outputting the rendered audio output signal by a plurality of speakers.

The method 700 comprises a sixth operation 706 of receiving an updated bitstream for the current streaming session and decoding the updated bitstream for the current streaming session, to determine an updated representation of spatial audio signals and associated metadata, the metadata including, in part, a set of descriptive metadata indicative of one or more capture parameters associated with a second capture setting. Configuring the audio renderer according to the decoded descriptive metadata comprises changing at least one of the one or more capture parameters of the set of descriptive metadata to be associated with the second capture setting.

The method may optionally further comprise further for receiving the set of descriptive metadata indicative of one or more capture parameters associated with the first capture setting to the one or more remote devices via an out-of-band signal. Furthermore, configuring the audio renderer may further comprise configuring the audio renderer according to the set of descriptive metadata indicative of one or more capture parameters associated with the first capture setting.

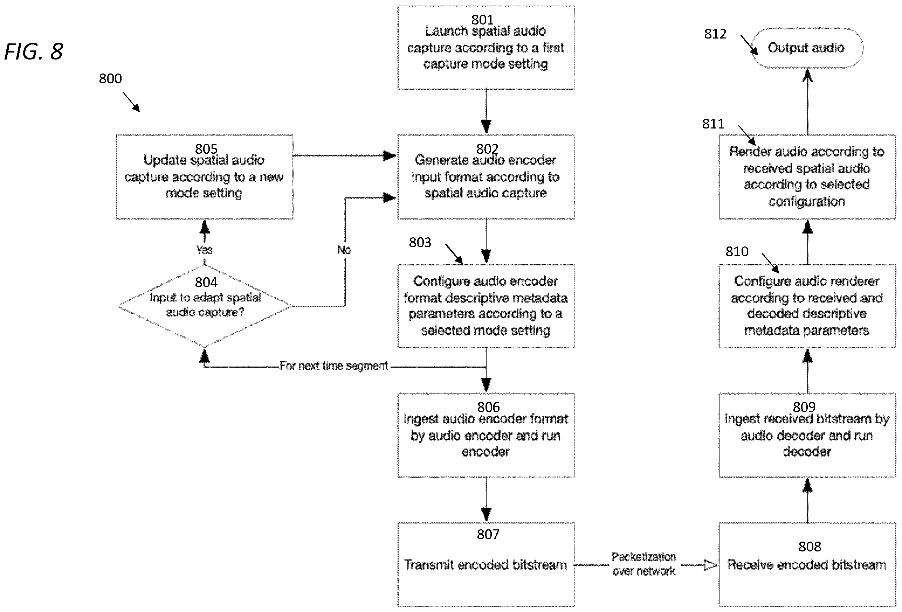

FIG. 8 is a flowchart 800 of a method according to example embodiments. Each element of the flowchart may comprise one or more operations. The operations may be performed in hardware, software, firmware or a combination thereof. For example, the operations may be performed, individually or collectively, by a means, wherein the means may comprise at least one processor; and at least one memory storing instructions that, when executed by the at least one processor, cause the performance of the operations. The operations 801-807 may, for example, be performed at an apparatus such as apparatus shown in FIG.1-5.

At step 801, user begins a spatial audio capture, e.g., a spatial audio call. The capture system responds by defining an initial capture mode with a first set of capture settings. At step 802, the capture system captures the spatial audio and generates an audio encoder input format according to the captured audio (and, e.g., according to other system settings such as negotiated encoding mode for the codec being supported by the spatial audio call). For example, the capture system generates MASA format for IVAS encoder.

At step 803, the capture system configures descriptive metadata parameters for the audio encoder format based on the initially selected capture mode and settings. These are inserted as part of the encoder format to complete the input for current time segment. For example, this inserts MASA descriptive metadata parameters as shown in examples above for an IVAS encoder time segment, i.e., a 20-ms frame.

At step 804, a next time segment is proceeded to and processed (e.g., a 20-ms frame for IVAS). The capture system detects any input to adapt the spatial audio capture. For example, this can be a user input, an application input, etc. For example, user can add a video recording, or select an audio focus, or any other relevant input that can change at least some aspect relating to the spatial audio capture. At step 806, if an input was detected, the spatial audio capture is updated according to a new mode setting. If no input is detected, the previously selected mode setting is maintained. Again, at step 802, the system captures the spatial audio and generates an audio encoder input format according to the captured audio. The spatial audio capture may now differ according to whether or the spatial audio capture was updated. At step 803, the capture system again configures the descriptive metadata parameters for the audio encoder format based now on the currently selected capture mode and settings.

At step 806, the audio encoder format is encoded by the audio encoder, which is ran, and encoded audio data (bitstream) is transmitted at step 807. The encoded bitstream is received 808 at a separate apparatus. The separated apparatus may be a user device of any kind, as for the apparatus where the encoded bitstream was sent from.

On the receiving side, at step 809 the bitstream is received and decoded using the decoder. At step 810, an audio renderer is configured according to the transmitted and decoded descriptive metadata parameters. For example, in IVAS these are the MASA descriptive metadata parameters as shown in examples above. There can be also other inputs, e.g., determining the output audio target based on the rendering device of the recipient (e.g., headphone or loudspeaker rendering). In addition, there could be, e.g., some user inputs relating to rendering mode.

At step 811, an output audio is renderer according to at least the received spatial audio and the selected configuration and finally at step 812 the audio is output.

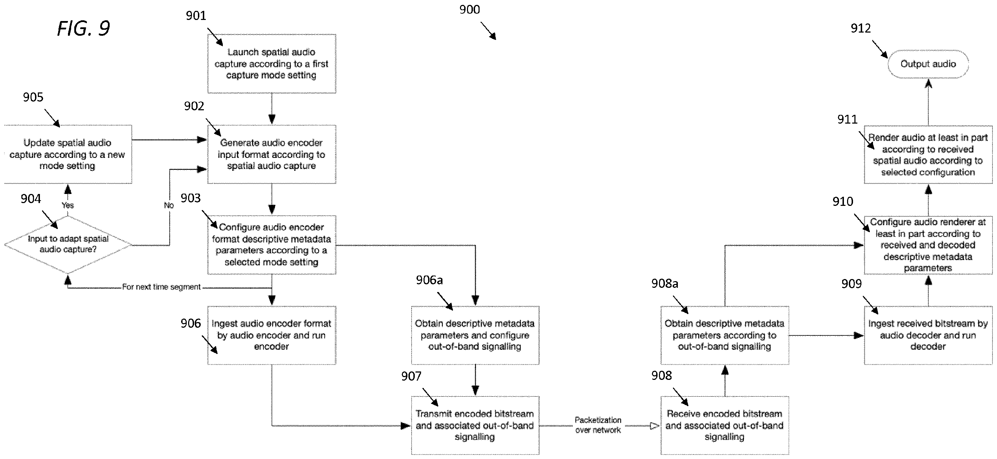

FIG. 9 is a flowchart 900 of a method according to example embodiments. Each element of the flowchart may comprise one or more operations. The operations may be performed in hardware, software, firmware or a combination thereof. For example, the operations may be performed, individually or collectively, by a means, wherein the means may comprise at least one processor; and at least one memory storing instructions that, when executed by the at least one processor, cause the performance of the operations.

Steps 901-912 correspond to steps 801-812 of FIG.8. Additionally, new steps 906a and 908a are present. In step 906a the descriptive metadata is provided to an external module that creates a suitable out-of-band signalling, e.g., using RTP. Thus, steps 906 is extended, and the practical packetization will be different. Additionally, on the receiving side at step 908a the descriptive metadata is received from the external module to obtain the suitable out-of-band signalling, e.g., using RTP.

The capture system disclosed in FIG. 8 and FIG. 9 adapts spatial audio capture according to selected effect or operation mode. In the present disclosure an encoder input format is generated adaptively based not only on the selected spatial audio capture and audio representation resulting from it but also using descriptive metadata parameters. Depending on codec implementation, the descriptive metadata can be utilized by the encoder and/or a suitable external control module that can relate, e.g., to RTP payload format implementation (including in examples RTP packetization). The descriptive metadata parameter configuration according to the disclosure can correspond to either the physical properties of the spatial audio capture or, at least partly, the desired effect corresponding with the selected operation mode. For example, the descriptive metadata parameter selection guides a renderer implementation to process and render the spatial audio in a different way in order to, e.g., make an effect stronger, cleaner, etc.

The IVAS codec or any other suitable immersive audio codec can provide means for delivering the necessary descriptive metadata to the receiver. There can be provided means to encode the descriptive metadata as part of the codec bitstream (as part of "audio data"). The metadata signalling being part of the bitstream / payload can be called in-band signalling.

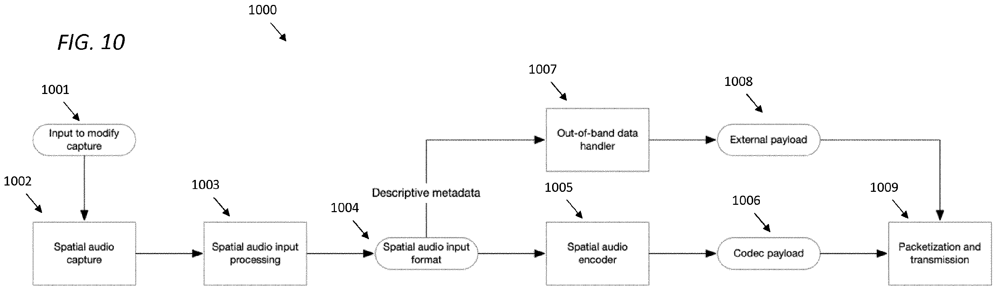

The IVAS codec or any other suitable immersive audio codec can provide means for delivering the necessary descriptive metadata to the receiver according to a suitable out-of-band signalling. For example, in preferred implementations, the descriptive metadata parameters or, e.g., their changes, can be transmitted using RTP. For example, RTP header extension mechanism can be used. FIG. 10 provides a block diagram that helps to understand the processing used in RTP.

### Example Apparatus

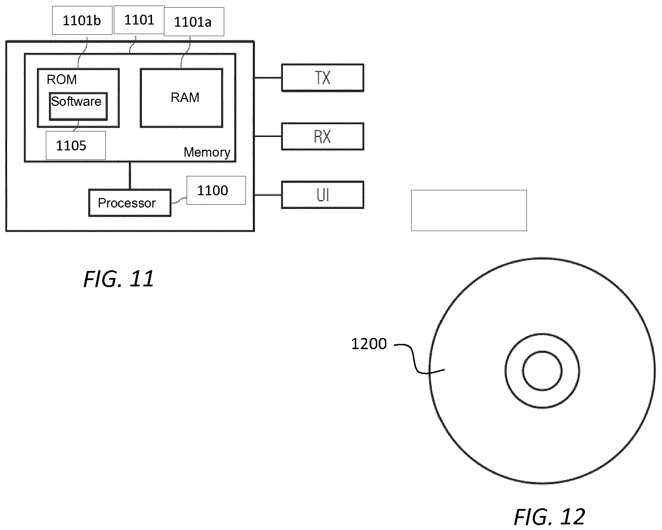

FIG. 11 shows an apparatus according to some example embodiments, which may comprise the apparatus 100. The apparatus may be configured to perform the operations described herein, for example operations described with reference to any disclosed process. The apparatus comprises at least one processor 1100 and at least one memory 1101 directly or closely connected to the processor. The memory 1101 includes at least one random access memory (RAM) 1101a and at least one read-only memory (ROM) 1101b. Computer program code (software) 1105 is stored in the ROM 1101b. The apparatus may be connected to a transmitter (TX) and a receiver (RX). The apparatus may, optionally, be connected with a user interface (UI) for instructing the apparatus and/or for outputting data. The at least one processor 1100, with the at least one memory 1101 and the computer program code 1105 are arranged to cause the apparatus to at least perform at least the method according to any preceding process, for example as disclosed in relation to the flow diagrams of FIGs. 6 and/or 7 and related features thereof.

FIG. 12 shows a non-transitory media 1200 according to some embodiments. The non-transitory media 1200 is a computer readable storage medium. It may be e.g. a CD, a DVD, a USB stick, a blue ray disk, etc. The non-transitory media 1200 stores computer program code, causing an apparatus to perform the method of any preceding process for example as disclosed in relation to the flow diagrams and related features thereof.

Names of network elements, protocols, and methods are based on current standards. In other versions or other technologies, the names of these network elements and/or protocols and/or methods may be different, as long as they provide a corresponding functionality. For example, embodiments may be deployed in 2G/3G/4G/5G networks and further generations of 3GPP but also in non-3GPP radio networks such as WiFi.

A memory may be volatile or non-volatile. It may be e.g. a RAM, a SRAM, a flash memory, a FPGA block ram, a DCD, a CD, a USB stick, and a blue ray disk.

If not otherwise stated or otherwise made clear from the context, the statement that two entities are different means that they perform different functions. It does not necessarily mean that they are based on different hardware. That is, each of the entities described in the present description may be based on a different hardware, or some or all of the entities may be based on the same hardware. It does not necessarily mean that they are based on different software. That is, each of the entities described in the present description may be based on different software, or some or all of the entities may be based on the same software. Each of the entities described in the present description may be embodied in the cloud.

Implementations of any of the above described blocks, apparatuses, systems, techniques or methods include, as non-limiting examples, implementations as hardware, software, firmware, special purpose circuits or logic, general purpose hardware or controller or other computing devices, or some combination thereof. Some embodiments may be implemented in the cloud.

It is to be understood that what is described above is what is presently considered the preferred embodiments. However, it should be noted that the description of the preferred embodiments is given by way of example only and that various modifications may be made without departing from the scope as defined by the appended claims.

## Claims

1. An apparatus, comprising:

   means for capturing spatial audio signals by a plurality of microphones using a first capture setting;
   means for generating a set of audio encoder input format data comprising a representation of the spatial audio signals and associated metadata, the metadata including, in part, a set of descriptive metadata indicative of one or more capture parameters associated with the first capture setting;
   means for providing the set of audio encoder input format data to an audio encoder for encoding the representation of the spatial audio signals and the associated metadata to a bitstream for a current streaming session;
   means for transmitting the bitstream to one or more remote devices for rendering the representation of the spatial audio signals based, at least in part, on the set of descriptive metadata; and
   means for determining, during the current streaming session, that the first capture setting changes to a second capture setting,
   wherein, in response to the determination that the first capture setting changes to a second capture setting, and while transmitting the bitstream, the means for capturing spatial audio signals is configured to capture spatial audio signals using the second capture setting and the means for generating the audio encoder input format data is configured to change at least one of the one or more capture parameters of the set of descriptive metadata to be associated with the second capture setting.

2. The apparatus of claim 1, wherein the means for determining that the first capture setting changes to the second capture setting is configured to determine that the orientation of the apparatus has changed from a first orientation to a second orientation.

3. The apparatus of claim 1 or claim 2, wherein the means for determining that the first capture setting changes to the second capture setting is configured to determine that an input request has been received to change the first capture setting to the second capture setting.

4. The apparatus of any preceding claim, further comprising
   means for transmitting the set of descriptive metadata indicative of one or more capture parameters associated with the first capture setting to the one or more remote devices via an out-of-band signal.

5. The apparatus of any preceding claim, wherein the one or more capture parameters comprises at least one of:

   a directional element comprising a number of directions described by the spatial metadata;

a channel element comprising a number of transport channels supported by the apparatus;

a source format describing a configuration of the apparatus; and

a variable description describing at least one of a capture type, an angle between two microphones of the plurality of microphones, an apparatus size and a microphone polar pattern including omnidirectional, cardiod, hypercardioid, or supercardioid patterns.

6. The apparatus of claim 5, wherein the bitstream for the current streaming session comprises the one or more capture parameters.

7. The apparatus of any preceding claim, wherein the means for generating the set of audio encoder input format data is configured to use a metadata-assisted spatial audio, MASA, format.

8. The apparatus of any preceding claim, wherein the audio encoder is an immersive voice and audio services, IVAS, codec.

9. The apparatus of any preceding claim, wherein the apparatus comprises a user device.

10. An apparatus, comprising:

means for receiving a bitstream for a current streaming session;

means for decoding the bitstream for the current streaming session, to determine a representation of spatial audio signals and associated metadata, the metadata including, in part, a set of descriptive metadata indicative of one or more capture parameters associated with a first capture setting;

means for configuring an audio renderer according to the decoded descriptive metadata;

means for providing the representation of the spatial audio signals to the audio renderer for rendering to produce a rendered audio output signal;

means for outputting the rendered audio output signal by a plurality of speakers; means for receiving an updated bitstream for the current streaming session and means for decoding the updated bitstream for the current streaming session, to determine an updated representation of spatial audio signals and associated metadata, the metadata including, in part, a set of descriptive metadata indicative of one or more capture parameters associated with a second capture setting, wherein the means for configuring the audio renderer according to the decoded descriptive metadata is configured to change at least one of the one or more capture parameters of the set of descriptive metadata to be associated with the second capture setting.

11. The apparatus of claim 10, wherein the means for receiving a bitstream for a current streaming session receives the bitstream from the apparatus of any of claims 1 to 9.

12. The apparatus of any of claims 10 or 11, further comprising means for receiving the set of descriptive metadata indicative of one or more capture parameters associated with the first capture setting to the one or more remote devices via an out-of-band signal;

and wherein the means for configuring the audio renderer further comprises configuring the audio renderer according to the set of descriptive metadata indicative of one or more capture parameters associated with the first capture setting.

13. The apparatus of any of claims 10 to 12, wherein the apparatus comprises a user device.

14. A method, comprising:

capturing spatial audio signals by a plurality of microphones using a first capture setting;

generating a set of audio encoder input format data comprising a representation of the spatial audio signals and associated metadata, the metadata including, in part, a set of descriptive metadata indicative of one or more capture parameters associated with the first capture setting;

providing the set of audio encoder input format data to an audio encoder for encoding the representation of the spatial audio signals and the associated metadata to a bitstream for a current streaming session;

transmitting the bitstream to one or more remote devices for rendering the representation of the spatial audio signals based, at least in part, on the set of descriptive metadata; and

determining, during the current streaming session, that the first capture setting changes to a second capture setting,

wherein, in response to the determination that the first capture setting changes to a second capture setting, and while transmitting the bitstream, capturing spatial audio signals comprising capturing spatial audio signals using the second capture setting and generating the audio encoder input format data comprises changing at least one of the one or more capture parameters of the set of descriptive metadata to be associated with the second capture setting.

15. A method, comprising:

receiving a bitstream for a current streaming session;
decoding the bitstream for the current streaming session, to determine a representation of spatial audio signals and associated metadata, the metadata including, in part, a set of descriptive metadata indicative of one or more capture parameters associated with a first capture setting;
configuring an audio renderer according to the decoded descriptive metadata;
providing the representation of the spatial audio signals to the audio renderer for rendering to produce a rendered audio output signal;
outputting the rendered audio output signal by a plurality of speakers;

receiving an updated bitstream for the current streaming session and decoding the updated bitstream for the current streaming session, to determine an updated representation of spatial audio signals and associated metadata, the metadata including, in part, a set of descriptive metadata indicative of one or more capture parameters associated with a second capture setting, wherein configuring the audio renderer according to the decoded descriptive metadata comprises changing at least one of the one or more capture parameters of the set of descriptive metadata to be associated with the second capture setting.

*FIG. 1A*

*FIG. 1B*

FIG. 2

FIG. 3A

FIG. 3B

FIG. 3C

EP 4 517 748 A1

FIG. 4

FIG. 5

600

601 CAPTURING SPATIAL AUDIO SIGNALS BY A PLURALITY OF MICROPHONES USING A FIRST CAPTURE SETTING

602 GENERATING A SET OF AUDIO ENCODER INPUT FORMAT DATA COMPRISING A REPRESENTATION OF THE SPATIAL AUDIO SIGNALS AND ASSOCIATED METADATA, THE METADATA INCLUDING, IN PART, A SET OF DESCRIPTIVE METADATA INDICATIVE OF ONE OR MORE CAPTURE PARAMETERS ASSOCIATED WITH THE FIRST CAPTURE SETTING

603 PROVIDING THE SET OF AUDIO ENCODER INPUT FORMAT DATA TO AN AUDIO ENCODER FOR ENCODING THE REPRESENTATION OF THE SPATIAL AUDIO SIGNALS AND THE ASSOCIATED METADATA TO A BITSTREAM FOR A CURRENT STREAMING SESSION

604 TRANSMITTING THE BITSTREAM TO ONE OR MORE REMOTE DEVICES FOR RENDERING THE REPRESENTATION OF THE SPATIAL AUDIO SIGNALS BASED, AT LEAST IN PART, ON THE SET OF DESCRIPTIVE METADATA

605 DETERMINING, DURING THE CURRENT STREAMING SESSION, THAT THE FIRST CAPTURE SETTING CHANGES TO A SECOND CAPTURE SETTING, WHEREIN, IN RESPONSE TO THE DETERMINATION THAT THE FIRST CAPTURE SETTING CHANGES TO A SECOND CAPTURE SETTING, AND WHILE TRANSMITTING THE BITSTREAM, THE CAPTURING SPATIAL AUDIO SIGNALS COMPRISES CAPTURING SPATIAL AUDIO SIGNALS USING THE SECOND CAPTURE SETTING AND THE GENERATING THE AUDIO ENCODER INPUT FORMAT DATA COMPRISES CHANGING AT LEAST ONE OF THE ONE OR MORE CAPTURE PARAMETERS OF THE SET OF DESCRIPTIVE METADATA TO BE ASSOCIATED WITH THE SECOND CAPTURE SETTING

*FIG. 6*

700

701 — RECEIVING A BITSTREAM FOR A CURRENT STREAMING SESSION

702 — DECODING THE BITSTREAM FOR THE CURRENT STREAMING SESSION, TO DETERMINE A REPRESENTATION OF SPATIAL AUDIO SIGNALS AND ASSOCIATED METADATA, THE METADATA INCLUDING, IN PART, A SET OF DESCRIPTIVE METADATA INDICATIVE OF ONE OR MORE CAPTURE PARAMETERS ASSOCIATED WITH A FIRST CAPTURE SETTING

703 — CONFIGURING AN AUDIO RENDERER ACCORDING TO THE DECODED DESCRIPTIVE METADATA

704 — PROVIDING THE REPRESENTATION OF THE SPATIAL AUDIO SIGNALS TO THE AUDIO RENDERER FOR RENDERING TO PRODUCE A RENDERED AUDIO OUTPUT SIGNAL

705 — OUTPUTTING THE RENDERED AUDIO OUTPUT SIGNAL BY A PLURALITY OF SPEAKERS

706 — RECEIVING AN UPDATED BITSTREAM FOR THE CURRENT STREAMING SESSION AND DECODING THE UPDATED BITSTREAM FOR THE CURRENT STREAMING SESSION, TO DETERMINE AN UPDATED REPRESENTATION OF SPATIAL AUDIO SIGNALS AND ASSOCIATED METADATA, THE METADATA INCLUDING, IN PART, A SET OF DESCRIPTIVE METADATA INDICATIVE OF ONE OR MORE CAPTURE PARAMETERS ASSOCIATED WITH A SECOND CAPTURE SETTING, WHEREIN CONFIGURING THE AUDIO RENDERER ACCORDING TO THE DECODED DESCRIPTIVE METADATA IS COMPRISES CHANGING AT LEAST ONE OF THE ONE OR MORE CAPTURE PARAMETERS OF THE SET OF DESCRIPTIVE METADATA TO BE ASSOCIATED WITH THE SECOND CAPTURE SETTING

*FIG. 7*

*FIG. 8*

801
Launch spatial audio capture according to a first capture mode setting

802
Generate audio encoder input format according to spatial audio capture

803
Configure audio encoder format descriptive metadata parameters according to a selected mode setting

805
Update spatial audio capture according to a new mode setting

804
Input to adapt spatial audio capture?

Yes

No

For next time segment

806
Ingest audio encoder format by audio encoder and run encoder

807
Transmit encoded bitstream

800

Packetization over network

808
Receive encoded bitstream

809
Ingest received bitstream by audio decoder and run decoder

810
Configure audio renderer according to received and decoded descriptive metadata parameters

811
Render audio according to received spatial audio according to selected configuration

812
Output audio

FIG. 9

901 — Launch spatial audio capture according to a first capture mode setting

900

905 — Update spatial audio capture according to a new mode setting

902 — Generate audio encoder input format according to spatial audio capture

904 — Input to adapt spatial audio capture?  Yes / No

903 — Configure audio encoder format descriptive metadata parameters according to a selected mode setting

For next time segment

906 — Ingest audio encoder format by audio encoder and run encoder

906a — Obtain descriptive metadata parameters and configure out-of-band signalling

907 — Transmit encoded bitstream and associated out-of-band signalling

Packetization over network

908 — Receive encoded bitstream and associated out-of-band signalling

908a — Obtain descriptive metadata parameters according to out-of-band signalling

909 — Ingest received bitstream by audio decoder and run decoder

910 — Configure audio renderer at least in part according to received and decoded descriptive metadata parameters

911 — Render audio at least in part according to received spatial audio according to selected configuration

912 — Output audio

*FIG. 10*

*FIG. 11*

1200

*FIG. 12*

EP 4 517 748 A1

Europäisches
Patentamt
European
Patent Office
Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2023/061556 A1 (NOKIA TECHNOLOGIES OY [FI]) 20 April 2023 (2023-04-20) <br> * figure 8 * <br> * page 10, lines 9-18,23-28 * <br> * page 15, line 20 - page 16, line 19 * <br> * page 16, lines 21-28 * <br> * page 18, lines 16-17 * <br> * page 28, lines 5-7 * <br> * page 29, lines 14-21 * <br> * page 30, lines 16-19 * <br> - - - - - | 1-15 | INV. <br> G10L19/008 <br> G06F3/16 <br><br> ADD. <br> G10L19/16 |
| X | US 2016/219392 A1 (VILERMO MIIKKA TAPANI [FI] ET AL) 28 July 2016 (2016-07-28) <br> * figure 2 * <br> * paragraphs [0126], [0134] * <br> - - - - - | 1,10,14, 15 | |
| X | US 2020/409995 A1 (SHEAFFER JONATHAN D [US] ET AL) 31 December 2020 (2020-12-31) <br> * figure 1 * <br> * paragraphs [0034], [0036] * <br> - - - - - | 1,10,14, 15 | |
| A | DOLBY LABORATORIES ET AL: "On IVAS Capture Device Orientation Signaling", 3GPP DRAFT; S4-200156, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG4, no. Wroclaw, Poland; 20200120 - 20200124 14 January 2020 (2020-01-14), XP052472986, Retrieved from the Internet: URL:https://ftp.3gpp.org/tsg_sa/WG4_CODEC/ TSGS4_107_Wroclaw/Docs/S4-200156.zip S4-200156-On IVAS Capture Device Orientation Signaling.docx [retrieved on 2020-01-14] * the whole document * <br> - - - - - | 1-15 | TECHNICAL FIELDS SEARCHED (IPC) <br><br> G10L <br> H04S <br> G06F |

The present search report has been drawn up for all claims

| Place of search | Date of completion of the search | Examiner |
|---|---|---|
| Munich | 26 November 2024 | Chétry, Nicolas |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

.................................................................................
& : member of the same patent family, corresponding
    document

EPO FORM 1503 03.82 (P04C01)

2

**EP 4 517 748 A1**

## ANNEX TO THE EUROPEAN SEARCH REPORT
## ON EUROPEAN PATENT APPLICATION NO.

EP 24 19 3105

This annex lists the patent family members relating to the patent documents cited in the above-mentioned European search report.
The members are as contained in the European Patent Office EDP file on
The European Patent Office is in no way liable for these particulars which are merely given for the purpose of information.

26-11-2024

| Patent document cited in search report | Publication date | Patent family member(s) | Publication date |
|---|---|---|---|
| WO 2023061556 A1 | 20-04-2023 | EP 4416724 A1 | 21-08-2024 |
| | | WO 2023061556 A1 | 20-04-2023 |
| US 2016219392 A1 | 28-07-2016 | CA 2908654 A1 | 16-10-2014 |
| | | CN 105284129 A | 27-01-2016 |
| | | EP 2984854 A1 | 17-02-2016 |
| | | KR 20150139937 A | 14-12-2015 |
| | | KR 20170143013 A | 28-12-2017 |
| | | RU 2015145733 A | 15-05-2017 |
| | | US 2016219392 A1 | 28-07-2016 |
| | | WO 2014167384 A1 | 16-10-2014 |
| US 2020409995 A1 | 31-12-2020 | NONE | |

EPO FORM P0459

For more details about this annex : see Official Journal of the European Patent Office, No. 12/82

30